# EUROPÄISCHE PATENTSCHRIFT

(11) **EP 4 587 615 B1**
(45) Veröffentlichungstag und Bekanntmachung des Hinweises auf die Patenterteilung: **01.07.2026**
(21) Anmeldenummer: 23798378.8
(22) Anmeldetag: 25.10.2023
(51) Int. Cl.: C25B 1/04, C25B 9/05, C25B 9/77, C25B 15/023

(54) **ELEKTROLYSEANLAGE UND VERFAHREN ZUM BETRIEB EINER SOLCHEN ELEKTROLYSEANLAGE**
ELECTROLYSIS SYSTEM AND METHOD FOR OPERATING AN ELECTROLYSIS SYSTEM OF THIS TYPE
INSTALLATION D'ÉLECTROLYSE ET PROCÉDÉ POUR FAIRE FONCTIONNER UNE TELLE INSTALLATION D'ÉLECTROLYSE

(30) Priorität: 29.11.2022 DE 102022212771
(43) Veröffentlichungstag der Anmeldung: 23.07.2025
(73) Patentinhaber: Siemens Energy Global GmbH & Co. KG, 81739 München (DE)
(72) Erfinder: RELLER, Christian, 32425 Minden (DE); WOLF, Erik, 91341 Röttenbach (DE)
(86) Internationale Anmeldenummer: PCT/EP2023/079753
(87) Internationale Veröffentlichungsnummer: WO 2024/115019

(56) Entgegenhaltungen:
- EP-A1- 3 045 221
- EP-A1- 4 001 464
- JP-A- 2010 121 146

## Beschreibung

Die Erfindung betrifft eine Elektrolyseanlage und ein Verfahren zum Betrieb einer solchen Elektrolyseanlage, siehe Ansprüche 1 und 10.

Wasserstoff wird heutzutage beispielsweise mittels Proton Exchange Membrane (PEM)-Elektrolyse oder alkalische Elektrolyse erzeugt. Die Elektrolyseure produzieren mit Hilfe elektrischer Energie Wasserstoff und Sauerstoff aus dem zugeführten Wasser.

Ein Elektrolyseur weist dabei in der Regel eine Vielzahl von Elektrolysezellen auf, welche benachbart zueinander angeordnet sind. Mittels der Wasserelektrolyse wird in den Elektrolysezellen Wasser in Wasserstoff und Sauerstoff zerlegt. Dabei sind verschiedene Elektrolysetechnologien und Elektrolyseure bekannt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Es ist auch möglich eine so genannte Anion-Exchange-Membrane Wasserelektrolyse (AEMWE) oder kurz AEM-Elektrolyse durchzuführen, bei der in gewisser Analogie zur PEM-Elektrolyse als Edukt allerdings eine Lauge in wässriger Lösung verwendet wird, häufig Kaliumhydroxid KOH oder Kaliumhydrogencarbonat KHCO₃ in wässriger Lösung mit einer geeignet gewählten Konzentration von etwa 1 mol/l. Das Wasser bzw. die Lauge in wässriger Lösung wird dabei an der Anode zu Sauerstoff oxidiert. Die Protonen passieren die protonendurchlässige Membran. Kathodenseitig wird Wasserstoff produziert. Das Wasser wird dabei in der Regel von einer Unterseite in den Anodenraum und/oder Kathodenraum gefördert. Auch bei der alkalischen Elektrolyse ist eine Membran vorgesehen, die als semipermeable Membran oder Diaphragma ausgebildet ist, welche selektiv einen Übertritt von bestimmten Ionen erlaubt. Als Elektrolyt dient Kalilauge (Kaliumhydroxid-Lösung, KOH) mit einer Konzentration von typischerweise 20-40 %. Die gasdichte Membran, das sogenannte Diaphragma, lässt zwar den Transport von OH⁻ -Ionen zu, verhindert aber gleichzeitig die Vermischung der entstehenden Produktgase.

Anlagentechnisch findet der Elektrolyseprozess in dem so genannten Elektrolysestack, zusammengesetzt aus mehreren Elektrolysezellen, statt. In dem unter DC-Spannung stehenden Elektrolysestack wird als Edukt Wasser eingebracht, wobei nach dem Durchlauf durch die Elektrolysezellen zwei Fluidströme, bestehend aus Wasser und Gasblasen (Sauerstoff O₂ bzw. Wasserstoff H₂) austreten. Im Folgenden ist daher eine Gasabscheidung notwendig, d.h. eine Phasentrennung von Wasser und dem jeweiligen gasförmigem Produktgas in dem Phasengemisch. Hierbei ist es üblich, dass über eine Verrohrung mehrerer Elektrolysezellen und weiterhin mehrere Elektrolyseeinheiten miteinander verbunden werden und das jeweils austretende Gas-Wasser-Gemisch einem zentralen Gasabscheider zugeführt wird.

In der Praxis befinden sich im Sauerstoffgasstrom dabei kleine Mengen an Wasserstoff und im Wasserstoffgasstrom kleine Mengen an Sauerstoff. Die Quantität des jeweiligen Fremdgases hängt vom Elektrolyse-Zelldesign ab und variiert auch unter dem Einfluss von Stromdichte, Katalysatorzusammensetzung, Alterung und hängt überdies auch vom Membranmaterial der Elektrolysezelle ab. Systemimmanent ist dabei, dass im Gasstrom des einen Produktgases jeweils das andere Produktgas in sehr geringen Mengen vorliegt. Im weiteren Prozessverlauf werden in der Regel in nachgeschalteten Schritten der Gasreinigung selbst geringe Sauerstoffspuren aus dem Wasserstoff mit zum Teil sehr aufwändigen und kostenintensiven Reinigungsschritten entfernt, insbesondere wenn eine besonders hohe Produktgasqualität gefordert ist, wie dies etwa bei der Nutzung des Wasserstoffs, z.B. für Brennstoffzellen, der Fall ist. Unter Umständen kann es dabei erforderlich sein, die Fremdgaskonzentration zu reduzieren, und zwar bereits unmittelbar an bzw. direkt nach der Elektrolysezelle bzw. dem ElektrolyseStack, z.B. in dem Elektrolyseur nachgeschalteten Gasabscheidern oder Gas-Separatoren.

JP 2010 121146 A (offenbarend den Oberbegriff des Anspruchs 1) betrifft eine Elektrolyseanlage, die mit zahlreichen unterschiedlichen Sensoren zur Zustandsüberwachung und für einen sicheren Elektrolysebetrieb ausgestattet ist. Eine Vielzahl von speziellen Messgeräten zur Kontrolle und Überwachung zahlreicher betrieblicher Messgrößen sind dabei an fest vorgegebenen Messstellen angeordnet.

Das Problem wird im Teillastbetrieb oder generell bei Lastwechseln und bei gealterten Membranen verstärkt und führt zu Einschränkungen der Betriebsweise oder sogar zu einer Verhinderung eines sicheren Weiterbetriebs und zu einer vorzeitigen Sicherheitsabschaltung. Dadurch ergeben sich vor allem bei positiven Lastgradienten, etwa beim Hochfahren der Elektrolyseanlage oder bei einem Wechsel von einem Teillastbetrieb zu einem Volllastbetrieb kritische Zustände für die Membran aufgrund von Differenzdrucken über die Zelltrennung vom Anodenraum zum Kathodenraum und damit einhergehender Druckgradienten.

Der Erfindung liegt daher die Aufgabe zugrunde eine Elektrolyseanlage anzugeben, die hinsichtlich Sicherheit und Anlageneffizienz einen verbesserten Betrieb ermöglicht.

Die Aufgabe wird erfindungsgemäß gelöst durch eine Elektrolyseanlage entsprechend Anspruch 1, inter alia umfassend einen Elektrolyseur zur Erzeugung von Wasserstoff und Sauerstoff als Produktgase, mit einer Vielzahl von Elektrolysezellen, die jeweils zwei Halbzellen aufweisen, die durch eine ionenpermeable Membran getrennt sind, so dass ein Anodenraum und ein Kathodenraum gebildet sind, wobei anodenseitig eine Sauerstoff-Produktleitung an den Anodenraum und kathodenseitig eine Wasserstoff-Produktleitung an den Kathodenraum angeschlossen ist, wobei die Wasserstoff-Produktleitung in einen ersten Gas-Separator und die Sauerstoff-Produktleitung in einen zweiten Gas-Separator einmündet, und mit einer Differenzdruckregeleinrichtung, die einen Differenzdruckaufnehmer umfasst, der derart eingerichtet ist, dass ein Differenzdruck zwischen dem Anodenraum und dem Kathodenraum ermittelbar ist, dessen Wert in der Differenzdruckregeleinrichtung verarbeitbar ist.

Die Aufgabe wird weiterhin erfindungsgemäß gelöst durch ein Verfahren zum Betrieb der entsprechenden Elektrolyseanlage entsprechend Anspruch 10, wobei Wasserstoff und Sauerstoff als Produktgase erzeugt werden, wobei mit dem Differenzdruckaufnehmer ein Differenzdruck zwischen dem Anodenraum und dem Kathodenraum gemessen wird, wobei das Messsignal in die Differenzdruckregeleinrichtung eingelesen und mit einem Referenzwert verglichen wird, und wobei bei einem Differenzdruck kleiner als der Referenzwert ein Weiterbetriebsmodus beibehalten wird.

Die in Bezug auf das Verfahren nachstehend angeführten Vorteile und bevorzugten Ausgestaltungen lassen sich sinngemäß auf die Elektrolyseanlage übertragen.

Die Erfindung geht bereits von der Erkenntnis aus, dass die Differenzdruckfestigkeit der ionenpermeablen Membran einer Elektrolyseanlage ein wesentlicher Parameter für die Auslegung und die Betriebsführung einer Elektrolyseanlage ist. Daher ist ein möglichst unverfälschter und zuverlässiger Messwert der aktuellen Druckdifferenz "in-situ" über der ionenleitenden Membran für die Überwachung und betriebliche Regelung und Fahrweise der Elektrolyseanlage unerlässlich. Dies ist insbesondere unter Berücksichtigung der alterungsbedingten Degradation der ionenleitenden Membran von einem großen technischen und wirtschaftlichen Interesse hinsichtlich der Frage, ob noch eine ausreichende Differenzdruckfestigkeit der Membran gegeben ist und damit ein sicherer Weiterbetrieb möglich ist. Die bisher bekannten Messprozeduren und die daraus ermittelten Werte sind indirekt und damit ungenau für eine Differenzdruckbestimmung, was vor allem bei höheren Druckbereichen zu großen Messungenauigkeiten führt. Um größere oder irreversible Membranschäden (Membranverlust) zu vermeiden sind wegen der Ungenauigkeiten bisher großzügige Sicherheitsreserven vorgehalten, die vorzeitige Sicherheitsabschaltungen und Revisionen der Elektrolyseanlage vorsehen, ohne dass diese Maßnahmen physikalisch notwendig gewesen wären. Dies betrifft auch die Überwachung des Wasserstoffübertritts von dem Kathodenraum in den Anodenraum über die Membran aufgrund der aktuellen Druckdifferenz, d.h. die Fremdgaskonzentration von Wasserstoff auf der Sauerstoffseite, die es unter Sicherheitsaspekten (Explosionsgefahr) unterhalb eines Maximalwerts zu begrenzen gilt. Unter wirtschaftlichen Gesichtspunkten betrachtet, sind die bestehenden Konzepte unzureichend und sehr nachteilig. Der Begriff ionenleitende Membran ist hierbei technisch umfassend insbesondere auch in dem Sinne einer ionenpermeablen Membran oder ionentransportierende Membran aufzufassen und mithin ist die ionenleitende Membran auf verschiedene Arten der Elektrolysen anwendbar.

Hierbei ist zu berücksichtigen, dass auf der technischphysikalischen Seite Wasser-Elektrolysen zellig aufgebaut sind mit einer Vielzahl von Elektrolysezellen. Die Zellen wiederum sind in zwei Halbzellen mit einer Membran als Trennung zwischen beiden Halbzellen strukturiert. Die Gasfreisetzung der Produktgase erfolgt in jeweils einer der beiden Halbzellen. Das Verhältnis der Gasvolumenströme H₂/O₂ beträgt aufgrund der Stöchiometrie der Elektrolysereaktion 2 zu 1. Diese Asymmetrie verursacht insbesondere bei positiven Lastgradienten einen Differenzdruck über der Zelltrennung, d.h. über die ionenleitende Membran, und zwar von der einen Kathodenraum bildenden Wasserstoffhalbzellseite über die Membran auf die einen Anodenraum bildende Sauerstoffhalbzellseite. Der Grund hierfür ist die zusätzliche unterschiedliche Menge an Flüssigkeit, die die Produktgase verdrängen müssen. Durch starke Gasbildung kann es daher zur Ausbildung von Stoßwellen im hydraulischen System kommen, wodurch lokal Druckspitzen auftreten können, die den Solldruck um ein Vielfaches übersteigen und bisher nicht zuverlässig messbar sind, als so genannter Joukowsky-Stoß in hydraulischen Systemen bekannt.

Mit fortschreitender Alterung, aber auch durch Defekte in der ionenleitenden Membran in einzelnen Zellen, kann diese ihre betriebsnotwendige Eigenschaft der Differenzdruckfestigkeit, verlieren. Tritt dieser Fall ein, muss die Elektrolyse kosten- und zeitaufwendig überholt werden, obwohl sie für den stationären Betrieb weiterhin nutzbar wäre.

Die Erfindung hat dabei erkannt, dass die derzeit bekannten einfachen und indirekten Differenzdrucküberwachungen es für zukünftige Anforderungen nicht vermögen, insbesondere den Konzentrationsanstieg des Wasserstoffs im Sauerstoff zuverlässig zu bestimmen und unterhalb einer noch zulässigen Grenze zu halten. Insbesondere trifft dies für zukünftige Elektrolyseanlagen mit Elektrolyseuren mit hohen geforderten Systemdrücken von > 30 bar zu. Die Empfindlichkeit der Sensoren im Fall des üblichen Aufbaus mit zwei unabhängigen Absolutdruck-Sensoren ist dann nicht mehr ausreichend, um Druckunterschiede im Bereich von typischerweise ± 50 mbar durch Differenzbildung zu ermitteln und genau aufzulösen: So liefert beispielsweise ein Absolutdruck-Sensor mit 1 bar Messbereich eine Skalierung von 10mV / mbar bei 0 - 10 V Spannungsbereich. Dagegen liefert beispielsweise ein Absolutdruck-Sensor mit 50 bar Messbereich eine Skalierung von 0,2 mV/mbar. Allein schon aus dieser einfachen Betrachtung ergibt sich bei einer typischen relativen Messgenauigkeit von jeweils 0,1% vom Messwert ± 1 mbar bzw. ± 50mbar Messgenauigkeit, was unzureichend ist.

Demgegenüber ist mit der Erfindung erstmals eine sehr genaue "in-situ" Differenzdruckbestimmung gerade auch bei hohen Systemdrucken direkt möglich. Als in-situ Zustandsindikator ist in der Elektrolyseanlage eine direkte Differenzdruckmessung über ausgewählten und repräsentativen Messstellen implementiert. Hierzu ist eine Differenzdruckregeleinrichtung vorgesehen, die einen Differenzdruckaufnehmer umfasst, der derart eingerichtet ist, dass ein Differenzdruck zwischen dem Anodenraum und dem Kathodenraum ermittelbar ist, dessen Wert in der Differenzdruckregeleinrichtung verarbeitbar ist. Somit ist über zwei ausgewählte Aufnahmestellen - jeweils repräsentativ für den Anodenraum und den Kathodenraum - der Differenzdruckaufnehmer geschaltet, dessen Differenzdruck-Messsignal in der Differenzdruckregeleinrichtung verarbeitbar ist. Die unmittelbare Differenzdruckmessung ermöglicht eine sehr genaue und nahezu verzögerungsfreie Zustandsdiagnostik und damit sichere Betriebsführung der Elektrolyseanlage. Zur Ermittlung und Bewertung des Differenzdrucks weist die Differenzdruckregeleinrichtung einen Differenzdruckaufnehmer auf, der unmittelbar zwischen den Halbzellen, den Differenzdruck misst. Diese Messung kann je nach Anforderung an unterschiedlichen Aufnahmestellen erfolgen.

Besonders vorteilhaft ist somit ein Weiterbetrieb der Elektrolyseanlage möglich, da ein aktueller Differenzdruck gegenüber einem zulässigen maximalen Differenzdruck zuverlässig überwachbar und regelbar ist. Auch kann der maximale zulässige Differenzdruck in der Differenzdruckregeleinrichtung vorgegeben und eingestellt bzw. angepasst werden.

Die Erfindung ist dabei vorteilhaft und flexibel anwendbar auf verschiedene Arten der Elektrolyseanlagen, wie etwa eine alkalische Wasser- wie auch die PEM-Elektrolyse oder eine Anion-Exchange-Membrane Wasserelektrolyse (AEMWE), wobei eine Differenzdruckregeleinrichtung mit Differenzdruckaufnehmern in die Elektrolyseanlage implementiert ist. Damit wird insbesondere die Gefahr eines unerwünschten Gasübertritts von einer auf die andere Seite der Elektrolysehalbzelle durch Differenzdrücke minimiert und überwacht. Speziell für eine PEM-Elektrolyse ermöglicht die Erfindung somit den sicheren Weiterbetrieb auch für den Fall, das die separierende Membran durch Risse, Löcher oder ähnliches alterungsbedingt geschädigt ist. Die Messung direkt über den Halbzellräumen - Anodenraum und Kathodenraum - bzw. in der unmittelbaren Nähe dieser repräsentiert am besten die Differenzdrucksituation während dynamischer Vorgänge, beispielsweise Leistungsaufnahme beim Anfahren der Elektrolyseanlage oder Betriebswechsel zwischen Teillastbetrieb und Volllastbetrieb.

In besonders bevorzugter Ausgestaltung der Elektrolyseanlage ist die Differenzdruckregeleinrichtung für eine Differenzdruckbegrenzung ausgelegt, wobei ein maximaler Wert für den Differenzdruck eingestellt ist.

Damit ist eine besonders einfache und zugleich funktionstüchtige Differenzdruckbegrenzung zwischen Anodenraum und Kathodenraum erreicht und somit die Differenzdruckbelastung über der Membran entsprechend eines eingestellten maximalen Werts des Differenzdrucks begrenzt, wobei zugleich der Gasübertritt überwacht wird. Im Allgemeinen ist im Betrieb ein möglichst geringer Differenzdruck zu bevorzugen.

Entsprechend der Erfindung ist bei der Elektrolyseanlage der Differenzdruckaufnehmer an einer jeweiligen Aufnahmestelle an dem ersten Gas-Separator und an dem zweiten Gas-Separator angeschlossen, wobei die Aufnahmestellen im oberen Bereich der Gas-Separatoren angebracht sind, so dass der Differenzdruck in der Gasphase der Gas-Separatoren ermittelbar ist. Dadurch ist ein Differenzdruck zwischen den Gasphasen der Gas-Separatoren bestimmbar.

Hierdurch wird im Betrieb der Elektrolyseanlage als ein zuverlässiges und repräsentatives Maß für den Differenzdruck der Druckdifferenz zwischen den Gasräumen der beiden Gas-Separatoren gemessen. Der Differenzdruck ist dabei unmittelbar und weitgehend unverfälscht über die Aufnahmestellen des Differenzdruckaufnehmers aufnehmbar. Die Gasphase befindet sich im oberen Behälterbereich der Gas-Separatoren über der flüssigen Phase, die sich im unteren Behälterbereich befindet. Durch die Phasentrennung von flüssiger und gasförmiger Phase in dem jeweiligen Produktgas, ist der Wasserstoff bzw. der Sauerstoff in dem Phasengemisch räumlich separierbar. Die Erfindung hat erkannt, dass durch diese Art der Positionierung und Implementierung des Differenzdruckaufnehmers an den speziell gewählten Aufnahmestellen des Gas-Separators in der Gasphase besonders zuverlässige und repräsentative Differenzdruckwerte liefert, die "in-situ" auf den Membranzustand und den Gasübertritt über die Membran in den Halbzellen schließen lassen.

Weiter entsprechend der Erfindung ist der Differenzdruckaufnehmer an einer jeweiligen Aufnahmestelle einer anodischen Halbzelle und einer kathodischen Halbzelle angeschlossen, so dass der Differenzdruck über den Halbzellen ermittelbar ist.

Die Differenzdruckmessung kann mit dieser Konfiguration unmittelbar über repräsentative Halbzellenräume durchgeführt werden, so dass ein Differenzdruck zwischen dem Anodenraum und dem Kathodenraum besonders präzise und zugleich flexibel ermöglicht ist. Dabei müssen die ausgewählten Halbzellen nicht notwendigerweise zu derselben Elektrolysezelle gehören. Es genügt, wenn die beiden Aufnahmestelle über eine jeweilige repräsentative Halbzelle den Differenzdruck zwischen dem Anodenraum und dem Kathodenraum messen. Eine unmittelbare lokale Differenzdruckinformation ist erbracht. Diese Art der Messung direkt über den Halbzellen bzw. in deren unmittelbarer Nähe repräsentiert in besonders zuverlässiger Weise die lokale Differenzdrucksituation während dynamischer Vorgänge, wie etwa beim Anfahren der Elektrolyseanlage. Dabei ist es auch möglich Redundanzen vorzusehen, indem mehrere Differenzdruckaufnehmer in die Elektrolyseanlage implementiert sind, die über den Halbzellen, über Elektrolyse-Stacks oder Segmente repräsentative in-situ Differenzdruckmessungen erlauben. Durch die Redundanz steigt die Genauigkeit und überdies sind dynamische Änderungen in der Elektrolyseanlage zeitlich und räumlich lokalisierbar. Über Anzahl und Anordnung der Differenzdruckaufnehmer sind somit innerhalb der Elektrolyseanlage auch lokale Zustandsinformationen der ionenleitenden Membran hinsichtlich deren alterungsbedingter aktueller Druckfestigkeit und eines Gasübertritts erfassbar.

Vorzugsweise ist bei der Elektrolyseanlage durch die anodische Halbzelle und die kathodische Halbzelle eine Elektrolysezelle gebildet, so dass der Differenzdruck zellenspezifisch über einer Elektrolysezelle ermittelbar ist.

Hierbei kommen ausgewählte Halbzellen der Zellenverbunds einer Elektrolyseanlage in Betracht, die durch eine Membran getrennt sind, und die eine Aufnahmestelle aufweisen, über die der Differenzdrucksensor den Differenzdruck abgreift. Somit ist eine zellspezifische Differenzdruckmessung implementiert und eine besonders genaue Lokalisierung räumlich wie zeitlich des Zellzustands ermöglicht.

Gegenüber der einfachen Messung des Differenzdrucks in der Gasphase zwischen den Gas-Separatoren kann speziell bei positivem Lastgradient das Differenzdrucksignal stark gedämpft und zeitlich verzögert sein, da in den im Allgemeinen recht groß dimensionierten Gas-Separatoren zuerst ein Druckaufbau erfolgen muss. Hier liefert das Einbringen der Differenzdruckaufnehmer in die Halbzellen zusätzliche Vorteile in diesen speziellen Betriebsmodi. Die Differenzdruckmessung über die Gas-Separatoren und lokal über ausgewählte Halbzellen ist demnach vorteilhaft kombinierbar und ergänzt sich.

In besonders bevorzugter Ausgestaltung der Elektrolyseanlage sind die Aufnahmestellen am Edukt-Eintritt der anodischen Halbzelle und der kathodischen Halbzelle angebracht.

Hierdurch ist zelleintrittsseitig eine jeweilige Aufnahmestelle in der Elektrolyseanlage implementiert, so dass der Differenzdruck zwischen dem Anodenraum und dem Kathodenraum unmittelbar und mit hoher Genauigkeit bestimmbar ist, da dynamische Effekte lokal mit erfassbar sind. Bei einer PEM-Elektrolyse kann beispielsweise am Zelleintritt oder in der Nähe des Zelleintritts für das Edukt-Wasser auf der Sauerstoffseite und der Wasserstoffseite jeweils eine Aufnahmestelle am Edukt-Eintritt des Differenzdruckaufnehmers angeordnet sein, was vorteilhafterweise eine besonders präzise Differenzdruckmessung und Differenzdrucküberwachung zwischen dem Anodenraum und Kathodenraum begünstigt.

Dabei ist in bevorzugter Ausgestaltung der Elektrolyseanlage kathodenseitig eine erste Edukt-Leitung an den Kathodenraum angeschlossen und anodenseitig eine zweite Edukt-Leitung an den Anodenraum angeschlossen.

Als Edukt kommt hier Wasser, insbesondere vollentsalztes Wasser, zur Durchführung einer PEM-Elektrolyse in Betracht, das über die beiden Edukt-Leitungen anodenseitig und kathodenseitig zuführbar ist. Hierdurch sind zwei Edukt-Kreisläufe als Wasserkreisläufe bei der PEM-Elektrolyse gebildet. Es ist auch möglich, dass in einer alternativen Ausgestaltung einer PEM-Elektrolyse das Edukt-Wasser vorzugsweise nur anodenseitig über eine Edukt-Leitung zuführbar ist. In diesem Fall bleibt die Kathode trocken und wird nicht mit Edukt-Wasser über eine Edukt-Leitung beaufschlagt, so dass nur ein Edukt-Kreislauf Anwendung findet. Man spricht auch von einem Betrieb mit trockener Kathode. Alternativ kann die Elektrolyseanlage für eine alkalische Elektrolyse ausgelegt sein, wobei als Edukt dann ein Elektrolyt, beispielsweise Kalilauge mit einer Konzentration von 20%-40% über eine Edukt-Leitung der Elektrolysezelle zuführbar ist.

Bevorzugt ist bei der Elektrolyseanlage die ionenpermeable Membran als eine protonendurchlässige Membran ausgestaltet ist, so dass eine PEM-Elektrolyse durchführbar ist.

Im Falle einer PEM-Elektrolyse ist die protonendurchlässige Membran bevorzugt auf Basis eines gas- und flüssigkeitsdichten Fluorpolymers ausgeführt. Somit kann die Membran selektiv ionentransportierend für die Protonen ausgeführt sein.

Im sauren oder Protonen-Austausch-Membran-Elektrolyseur (PEM-Elektrolyseur) wird destilliertes oder vollentsalztes Wasser durch elektrischen Strom in Wasserstoff und Sauerstoff aufgespalten. Er besteht aus einer protonendurchlässigen Polymermembran (engl. "proton exchange membrane" oder"polymer electrolyte membrane", kurz "PEM"). Diese ist kathodenseitig mit einer porösen Elektrode aus auf Kohlenstoff geträgertem Platin und anodenseitig mit metallischen oder als Oxidvorliegenden Edelmetallen (meist Iridium und Ruthenium) beschichtet. An diese Elektroden wird eine äußere Spannung angelegt. Üblicherweise wird auf der Anodenseite des Elektrolyseurs Wasser als Edukt zugeführt. Es können auch beide Halbzellen mit Wasser geflutet werden, oder auch nur die Kathodenseite, dies ist abhängig vom Verwendungszweck. Die katalytische Wirkung der Edelmetall-Elektrode führt zur Zersetzung des Wassers an der Anodenseite: Es entstehen Sauerstoff, freie Elektronen und positiv geladene H⁺-Ionen. Die WasserstoffIonen diffundieren durch die protonenleitende Membran auf die Kathodenseite, wo sie mit den Elektronen zu Wasserstoff als Produktgas kombinieren.

Im Falle einer alternativ besonders bevorzugten Anion-Exchange-Membran (AEM) ist die Membran selektiv ionentransportierend für Hydroxid-Anionen ausgeführt für den Transport von Hydroxidionen OH⁻ von der Anodenraum zu dem Kathodenraum über die ionentransportierende Membran. Somit ist die Elektrolyseanlage mit einem Elektrolyseur auf Basis einer Anion-Exchange-Membrane Wasserelektrolyse (AEMWE) eingerichtet.

In weiter bevorzugter Ausgestaltung der Elektrolyseanlage ist die ionenpermeable Membran als ein Diaphragma ausgestaltet, welche selektiv einen Übertritt von Hydroxidionen erlaubt, so dass eine alkalische Elektrolyse durchführbar ist.

Beim alkalischen Elektrolyseur wird bei einer Gleichspannung von mindestens 1,5 Volt an der Kathode Wasserstoff und an der Anode Sauerstoff gebildet. Als Elektrolyt dient Kalilauge (Kaliumhydroxid-Lösung, KOH) mit einer Konzentration von typischerweise 20 % - 40 %. Als ionenpermeable Membran kommt eine gasdichte Membran, das sogenannte Diaphragma zum Einsatz. Dieses lässt zwar den Transport von OH⁻-Ionen zu, verhindert aber gleichzeitig die Vermischung der entstehenden Produktgase. Als Elektroden werden sogenannte "DSA-Elektroden" (Dimensionsstabile Anoden) meist Titanelektroden mit einer Rutheniumoxid-Beschichtung eingesetzt. Dies sind Streckmetalle, die mit einem Edelmetall-Katalysatoroxid - z. B. Ruthenium- oder Iridiumoxid - beschichtet werden. Es gibt aber auch Systeme mit Raney-Nickel-Katalysatoren in einer Gasdiffusionselektrode. Alkalische Elektrolyseure sind in großem Maßstab weltweit im Einsatz.

Die Erfindung ist vorteilhafterweise sowohl bei einer PEM-Elektrolyseanlage, bei einer AEM-Wasserelektrolyseanlage als auch bei einer alkalischen Elektrolyseanlage implementierbar und nutzbar, so dass die Differenzdruckregeleinrichtung technologieunabhängig in der Elektrolyseanlage anwendbar ist. Die Trennung der Halbzellen erfolgt technologieabhängig spezifisch unterschiedlich. Alkalische Elektrolysen nutzen ein sogenanntes Diaphragma, eine halbdurchlässige Membran, die durchlässig für die alkalische Flüssigkeit und zugleich weniger durchlässig bis zu einem bestimmten Differenzdruck für Gas ist. Die PEM-Elektrolyse wie auch die AEM-Elektrolyse nutzt ein gas- und flüssigkeitsdichtes Fluorpolymer, wie oben beschrieben. Die PEM- Technologie ist damit im Allgemeinen deutlich weniger empfindlich gegenüber höheren Differenzdrucken oder Differenzdruckänderungen.

Dabei sind mit der Erfindung nunmehr auch geringe Änderungen in der Druckdifferenzen oder Schwankungen von < 50 mbar sehr genau und direkt bestimmbar und überwachbar. Dies erlaubt eine zuverlässige Diagnostik und Rückschlüsse insbesondere auf den Membranalterungszustands und einen unerwünschten Gasübertritt durch die ionenleitende Membran.

Somit ist es möglich, dass bei dem Verfahren zum Betrieb einer derartigen Elektrolyseanlage Wasserstoff und Sauerstoff als Produktgase erzeugt werden, wobei mit dem Differenzdruckaufnehmer ein Differenzdruck zwischen dem Anodenraum und dem Kathodenraum gemessen wird, wobei das Messsignal in die Differenzdruckregeleinrichtung eingelesen und mit einem Referenzwert verglichen wird, und wobei bei einem Differenzdruck kleiner als der Referenzwert ein Weiterbetriebsmodus beibehalten wird.

Ein vorgegebener und anpassbarer Referenzwert ist als Maximalwert für die zulässige Druckdifferenz in der Differenzdruckregeleinrichtung hinterlegt. Aufgrund der erhöhten Genauigkeit der Differenzdruckmessung- und Differenzdruckbegrenzung ist ein Weiterbetrieb der Elektrolyseanlage vorgesehen und vorteilhaft möglich. Dabei kann der Weiterbetrieb verschiedene Betriebsmodi beinhalten, also etwa ein Normalbetrieb unter Volllast oder Teillast oder ein Lastwechsel oder auch ein Anfahren. Auch im Weiterbetriebsmodus wird der Differenzdruck kontinuierlich überwacht. Gegenüber bisherigen Messkonzepten mit ungenauen Absolutdruck-Sensoren ist ein vorzeitiger Abschaltbetrieb - aufgrund vorzuhaltender Sicherheitsreserven - vermieden und eine wirtschaftliche Weiternutzung und Wasserstoffproduktion erzielt.

Vorzugsweise wird bei einem Differenzdruck größer als der Referenzwert durch die Differenzdruckregeleinrichtung ein Abschaltbetriebsmodus eingeleitet.

Durch die Differenzdruckmessung und die damit einhergehende höhere Messgenauigkeit, insbesondere bei großen Systemdrucken, sind die Regelungsparameter für die Initiierung des Abschaltbetriebsmodus in der Differenzdruckregeleinrichtung präziser bestimmbar und ein Sicherheitsreserve kann geringer ausfallen. Ein vorzeitiger Abschaltbetrieb wird vermieden, da vorteilhafterweise ein Weiterbetrieb möglichst Vorrang hat.

Dabei wird in dem Verfahren vorzugsweise eine Druckelektrolyse mit einem Systemdruck von mindestens 5 bar ausgeführt. Besonders bevorzugt sind hohe Systemdrucke von größer als 30 bar als Nenndruck für die Durchführung des Verfahrens mit einem Druckelektrolyseur. Bevorzugt sind Systemdrucke von mindestens 10 bar bis zu 35 bar. Das Verfahren der Erfindung ist daher in besonderer Weise vorteilhaft bei Druckelektrolysen anwendbar, da durch die erhöhte Messgenauigkeit durch die direkte Differenzdruckmessung über die mindestens zwei implementierten Differenzdruckaufnehmer auch bei hohen Drucken eine zuverlässige Differenzdruckermittlung und Differenzdruckbegrenzung erzielt wird. Generell sind möglichst geringe Differenzdrucke über der ionentransportierenden Membran zwischen dem Anodenraum und dem Kathodenraum zu bevorzugen, jedenfalls soll ein maximaler Wert für den Differenzdruck regelmäßig nicht überschritten werden.

Ausführungsbeispiele der Erfindung werden anhand einer Zeichnung näher erläutert. Hierin zeigen schematisch und stark vereinfacht die
- FIG: eine Elektrolyseanlage mit gemäß der Erfindung mit einer Differenzdruckregeleinrichtung.

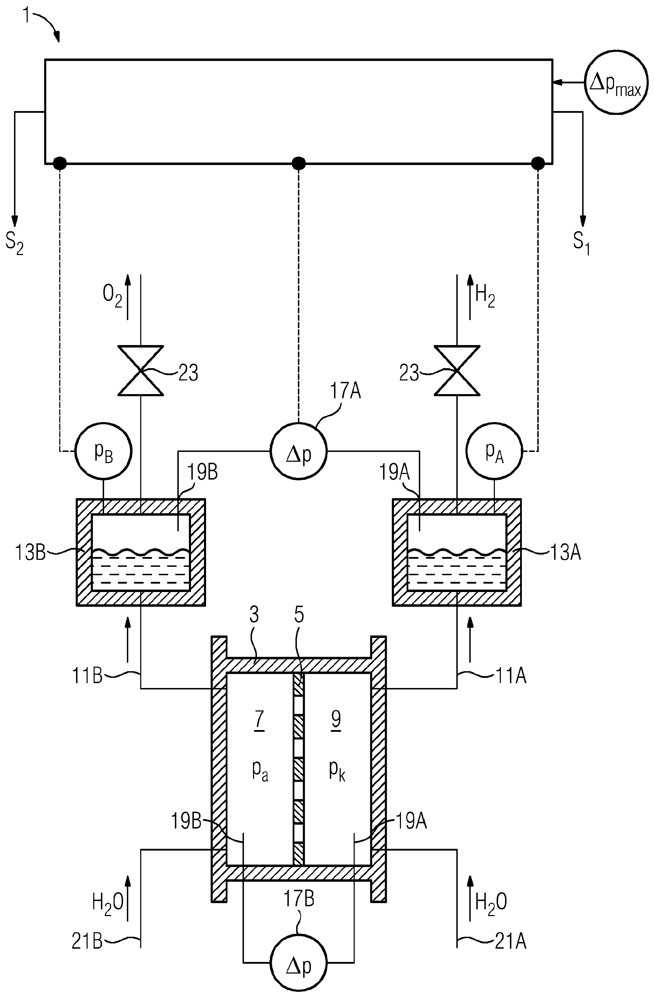

In der einzigen FIG ist eine Elektrolyseanlage 1 in einem stark vereinfachten Ausschnitt von Anlagenteilen und Komponenten dargestellt. Die Elektrolyseanlage 1 weist einen Elektrolyseur 3 auf, der wahlweise als ein PEM-Elektrolyseur oder als ein Alkali-Elektrolyseur ausgeführt ist.

Der Elektrolyseur 3 umfasst einen Kathodenraum 9 und einen Anodenraum 7, die durch eine ionenpermeable Membran 5 getrennt sind. Der Anodenraum 9 und der Kathodenraum 7 ist jeweils durch eine Vielzahl von in der FIG nicht näher dargestellten in einer axialen Richtung gestapelten jeweiligen anodischen bzw. kathodischen Halbzellen gebildet, die durch die ionenleitende Membran 5 getrennt sind. In der FIG ist mithin ein vertikal ausgerichteter Elektrolyseur 3 gezeigt, der zur elektrochemischen Spaltung von Wasser H₂O oder eines Elektrolyten als Edukt in Wasserstoff H₂ und Sauerstoff O₂ als Produktgase mittels elektrischen Stroms konzipiert ist. Im Falle einer sauren Elektrolyse kommt vollentsalztes Wasser H₂O als Edukt zum Einsatz. Im Falle einer alkalischen Elektrolyse findet eine Lauge Verwendung, beispielsweise Kaliumhydroxid KOH in einer wässrigen Lösung mit einer Konzentration von typischerweise 20% bis 40%. Mehrere solcher Elektrolysezellen können in horizontal gestapelte so genannte Elektrolyse-Stacks hintereinandergeschaltet sein.

Im gezeigten Ausführungsbeispiel der FIG ist in der Elektrolyseanlage 1 der Elektrolyseur als ein PEM-Elektrolyseur ausgeführt. Jede Elektrolysezelle weist hierbei eine protonendurchlässige Membran 5 auf Basis eines Fluorpolymers auf, an der auf beiden Seiten eine jeweilige Elektrode - eine Anode und eine Kathode - anliegt, über welche im Betrieb eine äußere Spannung angelegt wird. Kathodenseitig ist eine erste Edukt-Leitung 21A zum Zuführen von Wasser H₂O zu dem Kathodenraum 9 vorgesehen. Anodenseitig ist eine zweite Edukt-leitung 21B zum Zuführen von Wasser H₂O an den Anodenraum 7 angeschlossen. Hierdurch sind in dem als PEM-Elektrolyseur ausgestalteten Elektrolyseur 3 zwei Kreisläufe realisiert. Somit zirkuliert Wasser H₂O nicht nur durch den Anodenraum 7, sondern auch durch den durch den Kathodenraum 5. Es ist aber auch möglich, dass der Elektrolyseur 3 mit nur einem anodenseitigen Kreislauf realisiert ist.

Im Betrieb der Elektrolyseanlage 1 wird der aus dem Anodenraum 7 in der Elektrolysezelle erzeugte Sauerstoff O₂ über eine Sauerstoff-Produktleitung 11B abgeführt. Kathodenseitig ist eine Wasserstoff-Produktleitung 11A zum Abführen des erzeugten Wasserstoffs aus einem Kathodenraum 5 vorgesehen.

Zur jeweiligen Phasentrennung des Phasengemischs aus Produktgas und Wasser ist ein erster Gas-Separator 13A der Wasserstoff-Produktleitung 11A nachgeschaltet. Entsprechend ist ein zweiter Gas-Separator 13B der Sauerstoff-Produktleitung 11B nachgeschaltet. Somit ist eine Phasentrennung erzielt, so dass im oberen Bereich der Gas-Separatoren 11A, 11B ein Gasraum mit der Gasphase vorliegt, wohingegen die flüssige Phase am Boden der Gas-Separatoren 11A, 11B vorliegt, d.h. ein Wasserniveau.

Die Elektrolyseanlage 1 weist eine Differenzdruckregeleinrichtung 15 auf, die Differenzdruckaufnehmer 17A, 17B umfasst. So ist über die Gasräume ein Differenzdruckaufnehmer 17A geschaltet, der an jeweiligen Aufnahmestellen 19A, 19B an den ersten Gas-Separator 13A und an den zweiten Gas-Separator 13B abgreift, so dass unmittelbar ein Differenzdruck Δp bezüglich der Gasphasen der Gas-Separatoren 13A, 13B bestimmbar ist. Zusätzlich ist eine jeweilige Druckmesseinrichtung zur Bestimmung eines absoluten Druckwerts an die Gas-Separatoren 13A, 13B angeschlossen, so dass neben dem Differenzdruck Δp auch ein absoluter Druck p_{A} in der Gasphase des ersten Gas-Separators 13A und ein absoluter Druck p_{B} in der Gasphase des zweiten Gas-Separators 13A bestimmbar ist. Über den Differenzdruckaufnehmer 17A ist der Differenzdruck Δp zwischen dem Kathodenraum 9 und dem Anodenraum 7 bestimmbar. Die Messsignale für den Differenzdruck und die Druckwerte p_{A} und p_{B} in den Gas-Separatoren 13A, 13B werden in der Differenzdruckregeleinrichtung 15 verarbeitet. Als Eingabegröße für die Differenzdruckregeleinrichtung ist ein maximaler Differenzdruck Δpₘₐₓ hinterlegt oder einstellbar. Dieser Wert für den maximalen Differenzdruck Δpₘₐₓ ist bei Bedarf anpassbar an die jeweiligen ausgewählten oder typischen Betriebsbedingungen des Elektrolyseurs 3 und den Alterungszustand der ionenpermeablen Membran 5. Die Differenzdruckregeleinrichtung ist für die Ausgabe von Steuersignalen S₁, S₂ eingerichtet, die an ein nicht näher dargestelltes übergeordnetes Kontrollsystem der Elektrolyseanlage 1 übergeben werden können. Damit können die physikalischen Betriebsparameter der Elektrolyseanlage 1 wie etwa der Elektrolysestrom, die Elektrolysestromdichte, die Edukt-Volumenströme, der Systemdruck oder der Differenzdruck Δp < Δpₘₐₓ eingestellt und angepasst werden.

Die Differenzdruckregeleinrichtung 15 kann dabei auch als Bestandteil des übergeordneten Kontrollsystems konzipiert und in dieses integriert sein. Das Kontrollsystem ist mithin zum Steuern des Betriebs des Elektrolyse-Stacks ausgelegt. Mit Hilfe des Kontrollsystems kann beispielsweise im Anodenraum 7 ein vorgebbarer absoluter Druck pₐ als Sollwert eingestellt werden und im Kathodenraum 9 ein vorgebbarer absoluter Druck pₖ als Sollwert, wobei z.B. auch ein Betrieb möglich ist, bei dem der anodenseitige Druck pₐ größer eingestellt ist als der Druck pₖ im Kathodenraum 9. Auf diese Weise werden die möglichen negativen Folgen eines Membranschadens im Betrieb eines Elektrolyseurs 3 minimiert, da bei einem Durchbruch der ionenpermeablen Membran 5 weniger Wasserstoff durch die Membran von der Kathodenraum 9 in den Anodenraum 7 migriert. Hierdurch ist eine Notlaufeigenschaft erzielt.

Zur weiteren Verbesserung der Genauigkeit der Differenzdruckmessung und Differenzdrucküberwachung ist entsprechend der Erfindung zusätzlich zu dem Differenzdruckaufnehmer 17A ein weiterer Differenzdruckaufnehmer 17B an einer jeweiligen Aufnahmestelle 19A, 19B einer anodischen Halbzelle und einer kathodischen Halbzelle angeschlossen, so dass der Differenzdruck Δp lokal über den ausgewählten und repräsentativen Halbzellen ermittelbar ist. Dabei ist es möglich, dass die ausgewählten Halbzellen ein und dieselbe Elektrolysezelle bilden. Durch dieses lokale Einbringen des Differenzdruckaufnehmers 17B auf Halbzellenebene ist das Messsignal für den Differenzdruck Δp nicht von fluiddynamischen Vorgängen verfälscht, wie diese insbesondere bei Lastwechseln oder beim Anfahren vorkommen. Insbesondere sind dynamische Effekte der Wassersäule und des Phasengemischs aus Produktgas und Wasser über dem Anodenraum 7 und dem Kathodenraum 9 sind durch die lokale Messung weiter minimiert und eine gute Qualität der Messung auch bei hohen Systemdrucken, wie etwa bei einer Druckelektrolyse, gewährleistet.

Im Betrieb der Elektrolyseanlage 1 wird Edukt-Wasser H₂O über die Edukt-Leitungen 21A, 21B dem Elektrolyseur 3 zugeführt und Wasserstoff H₂ und Sauerstoff O₂ werden als Produktgase erzeugt. Mit dem Differenzdruckaufnehmer 17A, 17B wird ein Differenzdruck Δp zwischen dem Anodenraum 7 und dem Kathodenraum 9 gemessen. Das Messsignal wird in die Differenzdruckregeleinrichtung 15 eingelesen und mit dem Referenzwert Δpₘₐₓ verglichen. Wenn der Differenzdruck Δp kleiner als der Referenzwert Δpₘₐₓ ist, so wird ein Weiterbetriebsmodus beibehalten.

Bei einem Differenzdruck Δp größer als der Referenzwert Δpₘₐₓ wird durch die Differenzdruckregeleinrichtung 15 ein Abschaltbetriebsmodus eingeleitet. Dies kann auch in einer übergeordneten Kontrolleinheit erfolgen, indem von der Differenzdruckregeleinrichtung 15 entsprechende Steuersignale S₁, S₂ an eine übergeordnete Kontrolleinheit übergeben werden. Aufgrund der präziseren Differenzdruckmessung können auch Druckelektrolysen mit einem hohen Systemdruck von mindestens 30 bar zuverlässig durchgeführt werden. Generell ist durch den Weiterbetriebsmodus und die Notlaufeigenschaften ein sicherer Weiterbetrieb der Elektrolyseanlage möglich und ein vorzeitiges Abschalten vermieden, was wirtschaftliche Vorteile bringt und die Betriebszeiten erhöht. Wartungs- und Revisionsarbeiten können überdies durch eine kontinuierliche und genaue "in-situ" Differenzdruckdiagnostik vorausschauender geplant werden, und die Servicemaßnahmen je nach Alterungszustand terminiert und adaptiert.

## Patentansprüche

1. Elektrolyseanlage (1) umfassend einen Elektrolyseur (3) zur Erzeugung von Wasserstoff (H₂) und Sauerstoff (O₂) als Produktgase, mit einer Vielzahl von Elektrolysezellen, die jeweils zwei Halbzellen aufweisen, die durch eine ionenpermeable Membran (5) getrennt sind, so dass ein Anodenraum (7) und ein Kathodenraum (9) gebildet sind, wobei anodenseitig eine Sauerstoff-Produktleitung (11B) an den Anodenraum (7) und kathodenseitig eine Wasserstoff-Produktleitung (11A) an den Kathodenraum (9) angeschlossen ist, wobei die Wasserstoff-Produktleitung (11A) in einen ersten Gas-Separator (13A) und die Sauerstoff-Produktleitung (11B) in einen zweiten Gas-Separator (13B) einmündet, und mit einer Differenzdruckregeleinrichtung (15), die Differenzdruckaufnehmer (17A, 17B) umfasst, die derart eingerichtet sind, dass ein Differenzdruck (Δp) zwischen dem Anodenraum (7) und dem Kathodenraum (9) ermittelbar ist, dessen Wert in der Differenzdruckregeleinrichtung (15) verarbeitbar ist, wobei ein Differenzdruckaufnehmer (17A) an einer jeweiligen Aufnahmestelle (19A, 19B) an den ersten Gas-Separator (13A) und an dem zweiten Gas-Separator (13B) angeschlossen ist, wobei die Aufnahmestellen (19A,19B) im oberen Bereich der Gas-Separatoren (13A, 13B) angebracht sind, so dass der Differenzdruck (Δp) in der Gasphase der Gas-Separatoren (13A, 13B) ermittelbar ist,
**dadurch gekennzeichnet, dass**
ein Differenzdruckaufnehmer (17B) an einer jeweiligen Aufnahmestelle (19A, 19B) einer anodischen Halbzelle und einer kathodischen Halbzelle angeschlossen ist, so dass der Differenzdruck (Δp) über den Halbzellen ermittelbar ist.

2. Elektrolyseanlage (1) nach Anspruch 1, bei der die Differenzdruckregeleinrichtung (15) für eine Differenzdruckbegrenzung ausgelegt ist, wobei ein maximaler Wert für den Differenzdruck (Δpₘₐₓ) eingestellt ist.

3. Elektrolyseanlage (1) nach Anspruch 1, bei der durch die anodische Halbzelle und die kathodische Halbzelle eine Elektrolysezelle gebildet ist, so dass der Differenzdruck (Δp) zellenspezifisch über einer Elektrolysezelle ermittelbar ist.

4. Elektrolyseanlage (1) nach Anspruch 1, bei der die Aufnahmestellen (19A, 19B) am Eduktstrom-Eintritt der anodischen Halbzelle und der kathodischen Halbzelle angebracht sind.

5. Elektrolyseanlage (1) nach einem der vorhergehenden Ansprüche, bei der anodenseitig eine Edukt-Leitung (21B) an den Anodenraum (7) angeschlossen ist.

6. Elektrolyseanlage (1) nach einem der Ansprüche 1 bis 4, bei der kathodenseitig eine erste Edukt-Leitung (21A) an den Kathodenraum (9) angeschlossen ist und anodenseitig eine zweite Edukt-Leitung (21B) an den Anodenraum (7) angeschlossen ist.

7. Elektrolyseanlage (1) nach einem der vorhergehenden Ansprüche, wobei die ionenpermeable Membran (5) als eine protonendurchlässige Membran ausgestaltet ist, so dass eine PEM-Elektrolyse durchführbar ist.

8. Elektrolyseanlage (1) nach einem der Ansprüche 1 bis 6, wobei die ionenpermeable Membran (5) als eine anionentransportierende Membran ausgestaltet ist, so dass eine Anion-Exchange-Membrane Wasserelektrolyse (AEMWE) durchführbar ist.

9. Elektrolyseanlage (1) nach einem der Ansprüche 1 bis 6, bei der die ionenpermeable Membran (5) als ein Diaphragma ausgestaltet ist, welche selektiv einen Übertritt von Hydroxidionen erlaubt, so dass eine alkalische Elektrolyse durchführbar ist.

10. Verfahren zum Betrieb einer Elektrolyseanlage (1) nach einem der vorhergehenden Ansprüche, wobei Wasserstoff (H₂) und Sauerstoff (O₂) als Produktgase erzeugt werden, wobei mit den Differenzdruckaufnehmern (17A, 17B) ein Differenzdruck (Δp) zwischen dem Anodenraum (7) und dem Kathodenraum (9) gemessen wird, und wobei ein Differenzdruck (Δp) in der Gasphase der Gas-Separatoren (13A, 13B) und zellenspezifisch über den Halbzellen einer anodischen und einer kathodischen Halbzelle ermittelt wird, wobei das Messsignal in die Differenzdruckregeleinrichtung (15) eingelesen und mit einem Referenzwert (Δpₘₐₓ) verglichen wird, und wobei bei einem Differenzdruck (Δp) kleiner als der Referenzwert (Δpₘₐₓ) ein Weiterbetriebsmodus beibehalten wird.

11. Verfahren nach Anspruch 10, wobei bei einem Differenzdruck (Δp) größer als der Referenzwert (Δpₘₐₓ) durch die Differenzdruckregeleinrichtung (15) ein Abschaltbetriebsmodus eingeleitet wird.

12. Verfahren nach Anspruch 10 oder 11, wobei eine Druckelektrolyse mit einem Systemdruck von mindestens 5 bar, insbesondere mindestens 10 bar bis 35 bar, durchgeführt wird.

## Claims

1. An electrolysis plant (1) comprising an electrolyser (3) for generating hydrogen (H₂) and oxygen (O₂) as product gases, having a plurality of electrolysis cells, each of which has two half-cells separated by an ion-permeable membrane (5), so that an anode chamber (7) and a cathode chamber (9) are formed, wherein an oxygen product line (11B) is connected to the anode chamber (7) on the anode side and a hydrogen product line (11A) is connected to the cathode chamber (9) on the cathode side, wherein the hydrogen product line (11A) disembogues into a first gas separator (13A) and the oxygen product line (11B) disembogues into a second gas separator (13B), and having a differential pressure regulating device (15) which comprises differential pressure sensors (17A, 17B) which are set up such that a differential pressure (Δp) between the anode chamber (7) and the cathode chamber (9) is determinable, whose value is processable in the differential pressure regulating device (15), wherein a differential pressure sensor (17A) is connected at a respective sensing point (19A, 19B) to the first gas separator (13A) and to the second gas separator (13B), wherein the sensing points (19A, 19B) are arranged in the upper region of the gas separators (13A, 13B), so that the differential pressure (Δp) in the gas stage of the gas separators (13A, 13B) is determinable,
**characterised in that**
a differential pressure sensor (17B) is connected to a respective sensing point (19A, 19B) of an anodic half-cell and a cathodic half-cell, so that the differential pressure (Δp) is determinable across the half-cells.

2. The electrolysis plant (1) according to claim 1, wherein the differential pressure regulating device (15) is designed for differential pressure limitation, wherein a maximum value for the differential pressure (Δpₘₐₓ) is set.

3. The electrolysis plant (1) according to claim 1, wherein an electrolysis cell is formed by the anodic half-cell and the cathodic half-cell, so that the differential pressure (Δp) is determinable cell-specifically across an electrolysis cell.

4. The electrolysis plant (1) according to claim 1, wherein the sensing points (19A, 19B) are arranged at the reactant stream entry of the anodic half-cell and the cathodic half-cell.

5. The electrolysis plant (1) according to any one of the preceding claims, wherein a reactant line (21B) is connected to the anode chamber (7) on the anode side.

6. The electrolysis plant (1) according to any one of claims 1 to 4, wherein a first reactant line (21A) is connected to the cathode chamber (9) on the cathode side and a second reactant line (21B) is connected to the anode chamber (7) on the anode side.

7. The electrolysis plant (1) according to any one of the preceding claims, wherein the ion-permeable membrane (5) is configured as a proton-permeable membrane, so that PEM electrolysis is performable.

8. The electrolysis plant (1) according to any one of claims 1 to 6, wherein the ion-permeable membrane (5) is configured as an anion-transporting membrane, so that anion exchange membrane water electrolysis (AEMWE) is performable.

9. The electrolysis plant (1) according to any one of claims 1 to 6, wherein the ion-permeable membrane (5) is configured as a diaphragm which selectively allows pass-over of hydroxide ions, so that alkaline electrolysis is performable.

10. A method for operating an electrolysis plant (1) according to any of the preceding claims, wherein hydrogen (H₂) and oxygen (O₂) are generated as product gases, wherein a differential pressure (Δp) between the anode chamber (7) and the cathode chamber (9) is measured with the differential pressure sensors (17A, 17B) and wherein a differential pressure (Δp) is determined in the gas stage of the gas separators (13A, 13B) and cell-specifically across the half-cells of an anodic and a cathodic half-cell, wherein the measurement signal is read into the differential pressure regulating device (15) and compared with a reference value (Δpₘₐₓ) and wherein, in case of a differential pressure (Δp) smaller than the reference value (Δpₘₐₓ), a continued operating mode is maintained.

11. The method according to claim 10, wherein, in case of a differential pressure (Δp) greater than the reference value (Δpₘₐₓ), a switch-off operating mode is initiated by the differential pressure regulating device (15).

12. The method according to claim 10 or 11, wherein pressure electrolysis is performed with a system pressure of at least 5 bars, in particular at least 10 bars to 35 bars.

## Revendications

1. Installation d'électrolyse (1) comprenant un électrolyseur (3) pour la production d'hydrogène (H₂) et d'oxygène (O₂) en tant que gaz produits, avec une pluralité de cellules d'électrolyse qui présentent chacune deux demi-cellules qui sont séparées par une membrane perméable aux ions (5), de sorte qu'un compartiment anodique (7) et un compartiment cathodique (9) sont formés, dans laquelle, côté anodique, une conduite de produit oxygène (11B) est raccordée au compartiment anodique (7) et, côté cathodique, une conduite de produit hydrogène (11A) est raccordée au compartiment cathodique (9), dans laquelle la conduite de produit hydrogène (11A) débouche dans un premier séparateur de gaz (13A) et la conduite de produit oxygène (11B) débouche dans un deuxième séparateur de gaz (13B), et avec un dispositif de régulation de pression différentielle (15) qui comprend des capteurs de pression différentielle (17A, 17B) qui sont configurés de telle manière qu'une pression différentielle (Δp) entre le compartiment anodique (7) et le compartiment cathodique (9) peut être déterminée, dont la valeur peut être traitée dans le dispositif de régulation de pression différentielle (15), dans laquelle un capteur de pression différentielle (17A) est raccordé au niveau d'un point de détection respectif (19A, 19B) au premier séparateur de gaz (13A) et au deuxième séparateur de gaz (13B), dans laquelle les points de détection (19A, 19B) sont disposés dans la zone supérieure des séparateurs de gaz (13A, 13B), de sorte que la pression différentielle (Δp) peut être déterminée dans la phase gazeuse des séparateurs de gaz (13A, 13B),
**caractérisée en ce qu'**
un capteur de pression différentielle (17B) est raccordé au niveau d'un point de détection respectif (19A, 19B) d'une demi-cellule anodique et d'une demi-cellule cathodique, de sorte que la pression différentielle (Δp) peut être déterminée sur les demi-cellules.

2. Installation d'électrolyse (1) selon la revendication 1, dans laquelle le dispositif de régulation de pression différentielle (15) est conçu pour une limitation de pression différentielle, dans laquelle une valeur maximale pour la pression différentielle (Δpₘₐₓ) est définie.

3. Installation d'électrolyse (1) selon la revendication 1, dans laquelle une cellule d'électrolyse est formée par la demi-cellule anodique et la demi-cellule cathodique, de sorte que la pression différentielle (Δp) peut être déterminée de manière spécifique à la cellule sur une cellule d'électrolyse.

4. Installation d'électrolyse (1) selon la revendication 1, dans laquelle les points de détection (19A, 19B) sont disposés au niveau de l'entrée de flux de réactif de la demi-cellule anodique et de la demi-cellule cathodique.

5. Installation d'électrolyse (1) selon l'une des revendications précédentes, dans laquelle, côté anodique, une conduite de réactif (21B) est raccordée au compartiment anodique (7).

6. Installation d'électrolyse (1) selon l'une des revendications 1 à 4, dans laquelle, côté cathodique, une première conduite de réactif (21A) est raccordée au compartiment cathodique (9) et, côté anodique, une deuxième conduite de réactif (21B) est raccordée au compartiment anodique (7).

7. Installation d'électrolyse (1) selon l'une des revendications précédentes, dans laquelle la membrane perméable aux ions (5) est configurée comme une membrane perméable aux protons, de sorte qu'une électrolyse PEM peut être réalisée.

8. Installation d'électrolyse (1) selon l'une des revendications 1 à 6, dans laquelle la membrane perméable aux ions (5) est configurée comme une membrane de transport d'anions, de sorte qu'une électrolyse de l'eau à membrane d'échange d'anions (AEMWE) peut être réalisée.

9. Installation d'électrolyse (1) selon l'une des revendications 1 à 6, dans laquelle la membrane perméable aux ions (5) est configurée comme un diaphragme qui permet sélectivement un passage d'ions hydroxyde, de sorte qu'une électrolyse alcaline peut être réalisée.

10. Procédé pour faire fonctionner une installation d'électrolyse (1) selon l'une des revendications précédentes, dans lequel de l'hydrogène (H₂) et de l'oxygène (O₂) sont produits en tant que gaz produits, dans lequel une pression différentielle (Δp) entre le compartiment anodique (7) et le compartiment cathodique (9) est mesurée avec les capteurs de pression différentielle (17A, 17B), et dans lequel une pression différentielle (Δp) est déterminée dans la phase gazeuse des séparateurs de gaz (13A, 13B) et de manière spécifique à la cellule sur une demi-cellule anodique et une demi-cellule cathodique, dans lequel le signal de mesure est acquis dans le dispositif de régulation de pression différentielle (15) et est comparé à une valeur de référence (Δpₘₐₓ), et dans lequel, pour une pression différentielle (Δp) inférieure à la valeur de référence (Δpₘₐₓ), un mode de poursuite du fonctionnement est maintenu.

11. Procédé selon la revendication 10, dans lequel, pour une pression différentielle (Δp) supérieure à la valeur de référence (Δpₘₐ), un mode de mise à l'arrêt est instauré par le dispositif de régulation de pression différentielle (15).

12. Procédé selon la revendication 10 ou 11, dans lequel une électrolyse sous pression avec une pression de système d'au moins 5 bar, en particulier d'au moins 10 bar à 35 bar, est réalisée.
